# EUROPÄISCHE PATENTSCHRIFT

(11) **EP 3 833 450 B1**
(45) Veröffentlichungstag und Bekanntmachung des Hinweises auf die Patenterteilung: **14.05.2025**
(21) Anmeldenummer: 19752119.8
(22) Anmeldetag: 23.07.2019
(51) Int. Cl.: A62C 4/00, H02B 1/28, H02B 13/025

(54) **DRUCKENTLASTUNGSEINRICHTUNG UND GEHÄUSE MIT EINER SOLCHEN**
PRESSURE RELIEF DEVICE AND HOUSING COMPRISING SAME
DISPOSITIF DE DÉCOMPRESSION ET BOÎTIER POURVU D'UN TEL DISPOSITIF

(30) Priorität: 07.08.2018 DE 102018119144
(43) Veröffentlichungstag der Anmeldung: 16.06.2021
(73) Patentinhaber: R. STAHL Schaltgeräte GmbH, 74638 Waldenburg (DE)
(72) Erfinder: ARNHOLD, Thorsten, 74629 Pfedelbach (DE)
(74) Vertreter: Rüger Abel Patentanwälte PartGmbB
(86) Internationale Anmeldenummer: PCT/EP2019/069842
(87) Internationale Veröffentlichungsnummer: WO 2020/030426

(56) Entgegenhaltungen:
- WO-A1-2010/031336
- WO-A1-2016/070874
- WO-A1-2017/106204
- DE-A1- 102016 211 763

## Beschreibung

Die Erfindung betrifft eine Druckentlastungseinrichtung und ein Gehäuse mit einer solchen Druckentlastungseinrichtung. Insbesondere betrifft die Erfindung explosionsgeschützte Gehäuse der Schutzart "druckfeste Kapselung", die als Schutzart ex-d bezeichnet wird.

Gehäuse der Bauart druckfeste Kapselung weisen häufig eine sogenannten Druckentlastungseinrichtung auf, über die im Gehäuse entstandener Überdruck ins Freie gelangen kann. Solche Druckentlastungseinrichtungen weisen typischerweise einen porösen Körper auf, der zwar gasdurchlässig ist, der aber den Durchschlag von Flammen oder glühenden Partikeln aufgrund der Enge und Länge der ihn durchsetzenden Poren verhindert.

Aus der DE 10 2010 016 782 A1 ist eine Druckentlastungseinrichtung mit einem solchen porösen Körper bekannt, der eine erste, zum Gehäuseinnenraum weisende Seite und eine zweite, der Umgebung zugewandte Seite aufweist. Die Druckentlastungseinrichtung weist außerdem eine Membran auf, die zwischen der Umgebung und der zweiten Seite des Druckentlastungskörpers angeordnet ist, um Staub und Feuchtigkeit von dem Druckentlastungskörper fern zu halten. Damit soll verhindert werden, dass sich Poren des Druckentlastungskörpers mit Staub füllen, Feuchtigkeit zur Degradierung, Verschimmelung oder sonstigen Schädigung führt oder sich Biobeläge bilden, die die Funktion beeinträchtigen können oder zumindest unschön sind. Wird in dem Gehäuse eine Explosion gezündet und tritt ein Gasstrom durch den Druckentlastungskörper, reißt die Membran auf und gibt den Weg zur Umgebung hin frei. Die Membran ist randseitig mit einer Manschette versehen und mittels dieser an einen Stutzen der Druckentlastungseinrichtung gefasst. Ist die Membran zerstört muss sie ausgewechselt werden, weswegen die Manschette lösbar mit der Druckentlastungseinrichtung verbunden sein muss. Dadurch kann es auch zum unbeabsichtigten Entfernen der Membran von der Druckentlastungseinrichtung kommen. Außerdem kann die Membrane durch Einwirkung von außen reißen oder Schaden nehmen, z.B. wenn ein Gegenstand gegen die Membrane drückt.

Aus der WO 2010/031336 A1 ist ein ringförmiges Druckventil bekannt, das sich insbesondere für Kompressoren und Motoren zum Beispiel als Überdruckventil am Kurbelgehäuse eignet. Das Ventil weist einen federbelasteten Ventilteller auf, der bei Überdruck einen Ventilweg freigibt, der dann radial durch einen flammensperrenden Körper führt. Der ringförmige flammensperrende, zum Beispiel aus Drahtmaschen bestehende Körper kann mit Plastikmaterial versehen sein.

Weiter beschreibt die WO 2017/106204 A1 ein flammendurchschlagsicheres Belüftungssystem mit einem Metallmaschen-Flammensieb, das mit einer Abdeckung versehen ist. Diese Abdeckung schützt den Filter und andere Komponenten des flammendurchschlagsicheren Belüftungssystems gegen Beschädigung oder Staubansammlung. Die Abdeckung kann steif oder halbsteif ausgebildet sein, um einen Stoßschutz für den Filter zu bilden. Außerdem kann die Abdeckung so gestaltet sein, dass sie bei einer Explosion reißt und den gausaustritt durch den Filter gestattet.

Es ist Aufgabe der Erfindung, eine vereinfachte Druckentastungseinrichtung anzugeben.

Diese Aufgabe wird mit der Druckentlastungseinrichtung nach Anspruch 1 und einem Gehäuse nach Anspruch 12 gelöst.

Die Druckentlastungseinrichtung umfasst einen porösen, gasdurchlässigen Körper, der an einer Gasdurchtrittsstelle angeordnet ist, über die Gas aus einem zum Beispiel durch Explosion expandierenden Volumen ins Freie oder in ein Auffangvolumen eintreten kann. An der in Strömungsrichtung stromabwärts liegenden Seite des porösen gasdurchlässigen Körpers, die der Umgebung oder dem Auffangvolumen zugewandt ist, ist eine Membran angebracht, die an dem porösen Körper anliegt. Diese Membran deckt die Poren des gasdurchlässigen Körpers ab, so dass von außen her Verschmutzung und Feuchtigkeit von dem porösen Körper ferngehalten werden. Durch die Anlage der Membrane an dem porösen Körper stützt dieser die Membrane ab, so dass die Membrane gegen Stoß und ähnliche von außen kommende Belastung geschützt ist.

Vorzugsweise ist die Membrane an dem porösen Körper haftend angebracht, wobei die Haftung vorzugsweise wenigstens so groß ist, dass sich die Membrane bei Differenzdrücken, wie sie bei ordnungsgemäßem Betrieb auftreten, nicht von dem porösen Körper löst. Damit wird sichergestellt, dass der Schutz der Membrane, der durch die Abstützung an dem porösen Körper gegeben ist, auf Dauer erhalten bleibt.

Die Membran kann an dem porösen Körper vorzugsweise zumindest stellenweise und zumindest so fest haften, dass sie während der vorgesehenen Einsatzzeit der Druckentlastungseinrichtung nicht unkontrolliert verloren geht oder sich von dem porösen Körper löst. Die Haftung ist jedoch andererseits vorzugsweise so gering, dass sie sich von dem porösen Körper löst, wenn an diesem eine Druckdifferenz vorhanden ist, die über vernachlässigbare, während des Normalbetriebs vorhandene Druckdifferenzen hinausgeht. Bei Normalbetrieb können geringe Druckdifferenzen entstehen, wenn in einem Gehäuse, an dem die Druckentlastungseinrichtung angebracht ist, eine betriebsmäßige Erwärmung oder Abkühlung erfolgt.

Eine zur Ablösung der Membran von dem porösen Körper führende Druckdifferenz ist vorzugsweise jedenfalls geringer, als die zur Schädigung, Verformung oder zum Bersten des angeschlossenen Gehäuses führende Druckdifferenz. Beispielsweise kann die Druckdifferenz kleiner als 5 bar, 3 bar, 1 bar einige 100 mbar oder auch geringer als 100 mbar sein. Die Haftung der Membrane an dem porösen Körper kann auf Adhäsion und/oder auf einer formschlüssigen Verzahnung der Membrane mit der Oberflächenrauheit oder mit Poren des porösen Körpers beruhen.

Vorzugsweise ist die Haftfestigkeit der Membran an dem porösen Körper geringer als die Reißfestigkeit der Membran. Auf diese Weise kann durch einen durch den porösen Körper gehenden Gasstrom ein großflächiges Ablösen der Membran von dem porösen Körper erreicht werden, so dass die Membran im Explosionsfalle im Ganzen fortgeblasen wird und den porösen Körper auf ganzem Querschnitt für die Gasströmung freigibt.

Vorzugsweise ist die Membran eine feuchtigkeitsundurchlässige Folie, die an dem porösen Körper abziehbar haftend angebracht ist. Die Membrane kann an dem porösen Körper durch Urformung erzeugt werden. Sie kann aber auch in vorgefertigter Form z.B. als Folienzuschnitt bereitgestellt und an dem porösen Körper und gegebenenfalls einem mit diesem verbundenen Bauteil haften angebracht werden. Die Folie kann dazu auf der dem porösen Körper zugewandten Seite mit einem Haftmittel versehen sein. Die Folie kann auch eine flexible selbsthaftende Folie sein. Der poröse Körper ist dabei vorzugsweise eben oder lediglich einfach gewölbt, wie z.B. zylindrisch gewölbt. Er kann auch mehrere zueinander parallele Kanten aufweisen. Die Folie kann auch eine Schrumpffolie sein. In diesem Falle ist sie besonders zur Anbringung an einem porösen Körper geeignet, der räumlich ausgebildet, z.B. sphärische gewölbt ist.

Als Folienmaterial sind prinzipiell alle Elastomere und Polymere oder sonstige Kunststoffe sowie Mischungen aus diesen geeignet, die in nicht oder nicht vollständig ausgehärteter Form und somit als breiige oder flüssige Vorform an dem porösen Körper angebracht werden können, ohne dass das nicht ausgehärtete Material verstopfend in die Poren des porösen Körpers eindringt. Um dies sicherzustellen, kann der poröse Körper vor dem Anbringen der Membran mit einem benetzungshemmenden Stoff versehen werden, beispielsweise indem vor dem Aufsprühen der Membrane ein Trennmittel, z.B. Öl, eine Ölsuspension, Silikon, eine Silikonsuspension oder dergleichen auf die zu beschichtende Fläche des porösen Körpers aufgesprüht oder anderweitig aufgetragen wird.

Nach dem Aufbringen des Membranmaterials auf den porösen Körper und gegebenenfalls Bereiche eines ihn tragenden oder umgebenden Bauteils wird das Membranmaterial getrocknet. Die Trocknung kann durch Ablüften von flüchtigen Lösungsmitteln und/oder durch Vernetzen und somit Aushärten des Precursormaterials erfolgen. Die Vernetzung kann selbsttätig durch Zeitablauf oder durch entsprechend die Vernetzung bewirkende Einflüsse ausgelöst werden. Solche Einflüsse können die Exposition des Membranmaterials gegenüber Luft, Feuchtigkeit, Wärme, Strahlung, Licht oder der Einfluss chemischer Substanzen sein, die in dem Membranmaterial enthalten sind oder auf die Membran aufgebracht werden.

Die Membran kann eine oder mehrschichtig aufgebaut sein. Im einfachsten Fall ist die Membran eine auf den porösen Körper aufgesprühte Gummi- oder Elastomermembrane aus einem Material, das kommerziell, beispielsweise im Bereich der Kraftfahrzeugkarosserien, als Sprühfolie in Gebrauch ist. solches Material wird auf den porösen Körper von außen her aufgesprüht und "getrocknet", wobei sich aus dem aufgesprühten Material die gewünschte Membran bildet.

Die Membran kann ein- oder mehrschichtig aufgebaut sein. Erfindungsgemäß gehört zu der Membran eine Folie, die an dem porösen Körper teilflächig oder vollflächig anliegt. Bei der Erzeugung der Membran wird zum Beispiel diese Folie an den porösen Körper angelegt und diese Anordnung dann mit dem noch flüssigen Membranmaterial übersprüht.

Die Folie kann ein Papier, eine Kunststofffolie, eine Metallfolie, ein Gewebe, ein Kunststoff-Metall-Verbundmaterial oder ein sonstiges flexibles Flächengebilde sein. Diese Anordnung erleichtert das Ablösen der Membran von dem porösen Körper und gestattet die Anwendung des erfindungsgemäßen Konzepts, wenn schon besonders niedrige Druckdifferenzen zur Ablösung der Membran führen sollen oder wenn besonders geringe Diffusionsdurchlässigkeiten gewünscht sind.

Das erfindungsgemäße Konzept lässt sich auf praktisch beliebig geformte Druckentlastungskörper anwenden. Diese können als räumliche Körper, zum Beispiel Zylinder, Sphären, Pyramiden, Polyeder oder bedarfsweise auch als ebene Körper ausgebildet sein. Damit eröffnet das erfindungsgemäße Konzept ein weites Feld von Anwendungen, die bislang wirtschaftlich und konstruktiv nicht gelöst werden konnten.

Die Membran kann sich abschnittsweise über ein dem Körper tragendes Bauteil erstrecken und auch diesem haftend angebracht sein. Ein solches Bauteil kann **z.B.** eine Gehäusewand sein, an der der poröse Körper angebracht ist. Es können auch besonders große Druckentlastungskörper, die von außen gesehen hinter einem strömungsteilenden Gitter angeordnet sind, durch Besprühen mit Membranmaterial mit einer Membran versehen werden.

Die Membran kann Funktionselemente enthalten, die beispielsweise die Membranintegrität oder andere Sachverhalte überwachen. Dies beispielsweise, indem in die Membran Leitungsbahnen, Temperatursensoren, Drucksensoren oder dergleichen eingebracht werden. Beispielsweise kann dazu ein Membranmehrschichtaufbau dienen, zum Beispiel indem zunächst eine erste Schicht aushärtenden Materials auf den porösen Körper aufgesprüht, dann Funktionselemente angebracht und dann eine weitere Schicht aus härtendem und/oder trocknendem Materials aufgesprüht wird. Solche Mehrschichtstrukturen können dazu genutzt werden, das Ablösen und Aufreißen einer Membran zu erfassen und daraus ein zum Beispiel an eine zentrale Überwachungsstelle zu übermittelndes Signal zu generieren.

Weitere Abwandlungen der Erfindung sind möglich. Ausführungsformen de Erfindung ergeben sich aus der Zeichnung, Ansprüchen und der Beschreibung. Es zeigen:
Figur 1 ein Gehäuse mit einer erfindungsgemäßen Druckentlastungseinrichtung, in schematisierter Perspektivdarstellung,
Figur 2 die Druckentlastungseinrichtung des Gehäuses nach Figur 1, im Vertikalschnitt,
Figur 3 einen Ausschnitt der Druckentlastungsvorrichtung nach Figur 2,
Figur 4 eine abgewandelte Ausführungsform einer Druckentlastungseinrichtung an einem Gehäuse, im Vertikalschnitt,
Figur 5 eine abgewandelte Ausführungsform eines Druckentlastungskörpers mit einer Membran und zusätzlichem Funktionselement,
Figur 6 die Druckentlastungseinrichtung, in ausschnittsweiser stark vergrößerter Darstellung,
Figur 7 eine erfindungsgemäße Ausführungsform der Druckentlastungseinrichtung, in einer Schnittdarstellung ähnlich Figur 6.

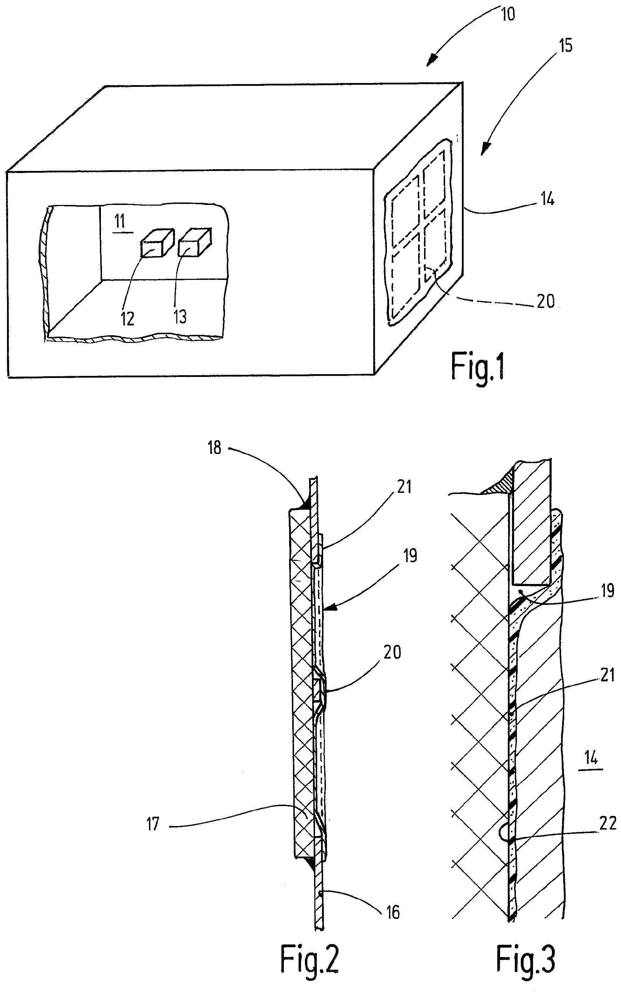

In Figur 1 ist ein Gehäuse 10 in teilweise aufgeschnittener Form perspektivisch veranschaulicht, das einen Innenraum 11 umschließt, in dem dort symbolisch veranschaulichte Komponenten 12, 13 angebracht sein können, die im Betrieb, zum Beispiel aufgrund von Wärmeentwicklung, Funkenbildung, Strahlung oder andere Einflüssen, als Zündquellen wirksam werden können. Das Gehäuse 10 trennt diese Zündquellen 12, 13 von der Umgebung 14, um eine Fortpflanzung von Flammen oder Explosionen, die sich im Innenraum 11 ereignen, in die Umgebung 12 zu verhindern. Das Gehäuse 10 ist vorzugsweise ein Gehäuse der Schutzart "druckfeste Kapselung" (ex-d). Um jedoch insbesondere bei in dem Innenraum 11 stattfindender Explosion einen schnellen Druckausgleich und somit einen schnellen Abbau des in dem Gehäuse 10 entstandenen Überdrucks zu ermöglichen, ist eine Druckentlastungseinrichtung 15 vorgesehen, die in Figur 1 rein beispielhaft an der Seite des Gehäuses 10 angebracht dargestellt ist. Die Druckentlastungseinrichtung 15 kann jedoch auch an jeder anderen Fläche des Gehäuses 10 angeordnet sein. Auch kann das Gehäuse 10 mehrerer solcher Druckentlastungseinrichtungen 15 gleicher oder verschiedener Größe aufweisen.

Im Beispiel ist die Druckentlastungseinrichtung 15 zwischen dem Innenraum 11 und der Umgebung 14 wirksam. Es ist jedoch ebenso gut möglich, die Druckentlastungseinrichtung 15 zwischen dem Innenraum 11 und einem nach außen geschlossenen Druckentlastungsvolumen anzuordnen, das von der Umgebung 14 temporär oder dauerhaft getrennt ist. Das Druckentlastungsvolumen kann seinerseits mit einer Druckentlastungseinrichtung versehen sein.

Der Aufbau der Druckentlastungseinrichtung geht genauer aus den Figuren 2 und 3 hervor. Danach bildet die Wand des Gehäuses ein Bauteil 16, an dem direkt oder indirekt ein Druckentlastungskörper 17 befestigt ist. Im vorliegenden Ausführungsbeispiel ist der Druckentlastungskörper 17 mit dem Bauteil 16 verschweißt, in dem zwischen dem Bauteil 16 und dem porösen Körper 17 eine um dessen Umfang herumführende ringförmige Schweißnaht 18 angebracht ist. Jedoch kommen im Rahmen der Erfindung alle anderen Möglichkeiten zur Verbindung der das Bauteil 16 bildende Gehäusewand mit dem Druckentlastungskörper 17 in Betracht. Beispielsweise kann der Druckentlastungskörper 17 in einer Fassung angeordnet sein, die ihrerseits mit dem Bauteil 16 verbunden, beispielsweise verschraubt, verschweißt, verklebt oder anderweitig an dieser fixiert ist. Auch kann der Druckentlastungskörper 17, falls das Gehäuse 10 in Gusstechnik oder in einem anderen Urformverfahren beispielsweise in additiver Fertigungstechnik hergestellt ist, randseitig in das Bauteil 16, d.h. in die Gehäusewand eingebettet sein.

Im vorliegenden Ausführungsbeispiel ist der Druckentlastungskörper 17 an einer Druckentlastungsöffnung 19 angebracht, über die der Innenraum 11 mit der Umgebung 14 verbunden ist. Diese Druckentlastungsöffnung 19 kann jede geeignete Form aufweisen, beispielsweise eine rechteckige oder quadratische Form mit scharfen oder gerundeten Ecken, eine Ovalform, eine Kreisform oder jede andere geeignete Form. Auch kann der poröse Körper 17 selbst die gesamte betreffende Wandfläche des Gehäuses 10 einnehmen, d.h. selbst die Wand bilden, oder sich über mehrere Wände erstrecken.

Im Ausführungsbeispiel ist die Druckentlastungsöffnung durch ein Gitter 20 in mehrere Teilöffnungen unterteilt, wie in Figur 1 gestrichelt dargestellt ist. Das Gitter 20 kann zur Unterteilung der durch den porösen Körper 17 führenden Gasströmung in mehrere Teilströme und somit zur Vergleichmäßigung der Strömung sowie auch zur Abstützung des porösen Köpers 17 dienen. Bei anderen Ausführungsformen kann das Gitter 20 auch entfallen.

Der poröse Körper 17 kann jeder geeignete flammenlöschend wirkende gasdurchlässige Druckentlastungskörper sein, wie beispielsweise ein offenporiger Metallschaum, ein Metall-Sinterkörper, ein aus Metalldrähten gesinterter Körper, wobei die Drähte beispielsweise nach Art eines Vlieses oder Filzes ungeordnet oder in aufeinander liegenden Gewebe- oder Gestrickstapeln angeordnet sein können. Auch kann der poröse Körper 17 durch einen Keramikkörper, einen metallisierten Keramikkörper, einen aus Keramikfasern oder anderen Keramikpartikeln gesinterten oder mit organischem Bindemitteln gebundenen Körper oder dergleichen, gebildet sein.

Der zur Druckentlastung dienende Körper 17 ist, wie die Figuren 2 und 3 erkennen lassen, mit einer vorzugsweise feuchtigkeitsundurchlässig ausgebildeten Membran 21 versehen, die den Körper 17 an seiner der Umgebung 14 zugewandten Seite 22 (siehe Figur 3) vorzugsweise vollflächig bedeckt. Die Membran 21 kann sich dabei randseitig auch über das Bauteil 16 erstrecken und dieses an einem die Druckentlastungsöffnung 19 umgebenden Rand übergreifen. Damit dichtet die Membrane 21 die Druckentlastungsöffnung 19 insbesondere gegen Feuchtigkeitszutritt ab.

Die Membran 21 wird vorzugsweise an dem Gehäuse 10 sowie damit an der Druckentlastungseinrichtung 15 durch Urformung erzeugt. Der Körper 17 und gegebenenfalls das ihn tragende Bauteil bilden somit eine Grundlage, gewissermaßen eine Form, auf der die Membrane 21 ausgebildet und somit urgeformt wir. Im einfachsten Fall wird die Membrane 21 durch Auftragen einer Precursor-Zusammensetzung auf den Druckentlastungskörper 17 und den Rand der Druckentlastungsöffnung 19 z.B. durch Aufsprühen oder auch Aufdrucken, Aufwalzen, Aufpinseln oder ähnliche Verfahren erzeugt. Die Membrane 21 kann dabei, je nach Prozessführung, mit im Wesentlichen konstanter Schichtdicke oder auch mit wechselnden Schichtdicken erzeugt werden. Das Material wird auf diejenige Seite des porösen Körpers 17 aufgetragen, bei auf der im Falle eines erforderlichen Druckabbaus der niedrigere Druck herrscht.

Die formlose breiige oder flüssige Precursor-Zusammensetzung kann beispielsweise ein teilvernetztes oder unvernetztes Elastomer oder Polymer oder dergleichen sein, wie es zum Beispiel als aufsprühbares "Flüssiggummi" im Handel ist. Auch jede andere auftragbare, insbesondere sprühfähige Folie kann Anwendung finden, sofern sie einen von dem porösen Körper 17 abziehbaren Film bildet.

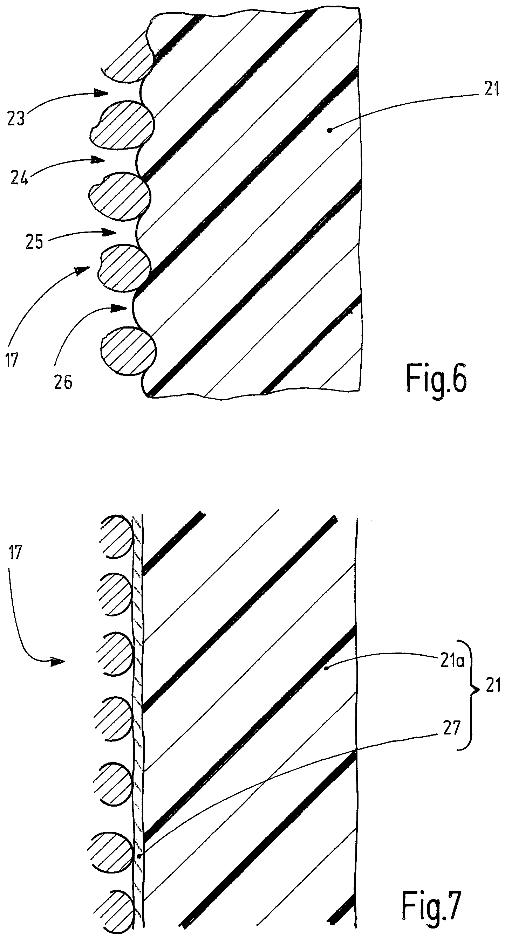

Das Gehäuse 10 mit der erfindungsgemäßen Druckentlastungseinrichtung 15 arbeitet wie folgt:
Bei der Bereitstellung des Gehäuses 10 ist die Membran 21 den Öffnungsrand überdeckend auf die Druckentlastungsöffnung 19 und den an ihr angeordneten Körper 17 von außen aufgesprüht worden, so dass die Druckentlastungsöffnung 19 durch die entstandene Membrane 21 nach außen verschlossen ist. Damit ist eine Verschmutzung und gegebenenfalls mit einer Verstopfung von Poren des Körpers 17 einhergehende Einwanderung von Staub oder Feuchtigkeit in den Körper 17 unterbunden. Es wird dazu auf Figur 6 verwiesen, die den Körper 17 an seiner der Membrane 21 zugewandten Seite im Schnitt zeigt. Das Material der Membrane 21 überdeckt die Poren 23, 24, 25, 26, ohne in diese tief einzudringen. Die Membrane 21 haftet dabei an dem porösen Körper 17 zumindest so fest, dass ein unbeabsichtigtes Abfallen der Membrane 21 von dem porösen Körper 17 und dem Gehäuse 10 ausgeschlossen ist.

Hat das Gehäuse 10 beispielsweise durch vorhandene Ritzen oder andere Öffnungen ein explosibles Gasgemisch aufgenommen, und wird dieses gezündet, oder explodiert oder brennt eine der Komponenten 12, 13, baut sich in dem Innenraum 11 ein Überdruck gegenüber der Umgebung 14 auf, der zu einer Druckdifferenz an dem Druckentlastungskörper 17 führt. Durch diesen wird die Membrane 21 von dem Körper 17 gelöst, so dass sich die Membrane 21 von diesem lösen, von ihm weg blähen und dabei aufreißen kann. Damit gibt die nun zerstörte Membran 21 den Weg für aus dem Innenraum 11 ausströmendes Gas frei. Der Körper 17 verhindert jedoch aufgrund der Länge und Enge der Poren 23 bis 26 einen Flammendurchschlag nach außen.

Nach einem solchen Ereignis ist die Membran 21 zu ersetzen. Im einfachsten Fall geschieht dies durch erneutes Aufsprühen von Membranmaterial, beispielsweise Flüssiggummi, auf die Druckentlastungsöffnung 19 und den darunter liegenden porösen Körper 17.

Erfindungsgemäß veranschaulicht Figur 7 mit einer mehrschichtig aufgebauten Membrane 21. Zu dieser gehören im Beispiel nach Figur 7 eine Folie 27 und eine darauf aufgesprühte zum Beispiel aus Flüssiggummi bestehende und nachfolgend ausgehärtete Schicht 21a. Die Folie 27 liegt mit geringer Haftung und gegebenenfalls sehr geringer Haftung an dem porösen Körper 17 an und überdeckt diesen teil- oder vollflächig. Die aufgesprühte Schicht 21a kann an der Folie 27 haften oder auch lediglich lose an dieser anliegen. Die Schicht 21a kann eine gleichförmige Dicke aufweisen oder unterschiedliche Dicken haben. Insbesondere kann sie im mittleren Beriech der Folie 27 dünner ausgelegt sein oder stellenweise, insbesondere im mittleren Bereich, ganz fehlen.

Dieser Aufbau eignet sich insbesondere für Einsatzfälle, bei denen die Membrane 21 bei sehr geringen Druckdifferenzen den Strömungsweg durch den Druckentlastungskörper 17 freigeben muss.

In weiterer Abwandlung dieser Ausführungsform kann die Schicht 21a auch auf einen Randbereich der Folie 27 beschränkt werden, so dass die Schicht 21 eine feuchtigkeitsdichte Verbindung zwischen der Folie 27 und dem Bauteil 16 schafft.

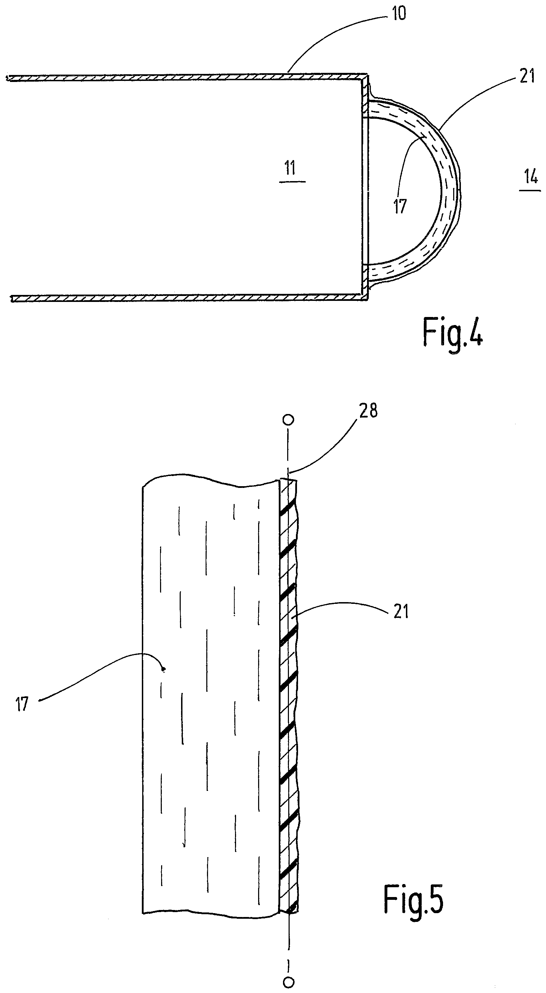

Figur 4 veranschaulicht eine Ausführungsform mit räumlich geformtem, zur Druckentlastung dienendem Körper 17, der lediglich beispielhaft als halbkugelförmige Kuppel veranschaulicht ist. Jedoch sind auch Zylinderformen mit flachem oder gerundetem Ende, Polyederformen, Kegel- oder Kegelstumpfformen und ähnliches möglich. Die der Umgebung 14 zugewandte Außenseite des Körpers 17 ist wieder mit einer aufgesprühten Membran 21 versehen, die eine ablösbare Folie bildet. Im Übrigen gilt die vorige Beschreibung der Ausführungsbeispiele nach Figur 1 bis 3 sowie Figur 6 und 7 entsprechend.

Eine weitere, ebenfalls für alle genannten Ausführungsformen anwendbarer Abwandlung veranschaulicht Figur **5****.** Dort ist auf den porösen Körper 17 eine Membran 21 aufgesprüht, die ein weiteres Funktionselement 28 enthält. Ein solches kann wie dargestellt ein Leiterstreifen sein, der auf die Membran 21 aufgebracht oder in diese eingebettet ist. Als Leiterstreifen kann beispielsweise eine aus Leitlack gebildete Leiterbahn, ein Metallfolienstreifen oder dergleichen dienen. Wird die Membran 21 von den Druckentlastungskörper 17 abgelöst und reißt die Membran 21 auf, kann dies von dem Funktionselement 28 erfasst werden. Beispielsweise kann ein entsprechender leiterstriefen aufreißen und dies durch einen Überwachungsstromkreis erfasst und weiter gemeldet werden.

Funktionselemente können auch in den Membraneaufbau nach Figur 7 integriert sein. Z.B. kann die Folie 27 Funktionselement, z.B. elektronische Bauteile, Leiterzüge, elektronische Schaltungen und dergleichen tragen, die dann von der Schicht 21a überdeckt werden.

Es wird darauf hingewiesen, dass die Membran 21 insgesamt auch in Form eines Zuschnitts einer vorgefertigten Folie bereitgestellt werden kann, die flexibel ist und an dem Körper 17 anliegend an der Druckentlastungseinrichtung 15 angebracht wird. Die Folie kann dazu einseitig mit einem Haftstoff beschichtet sein, der eine Haftung zu dem porösen Körper 17 vermittelt. Alternativ kann die Folie selbsthaftend ausgebildet sein. Die Folie kann als thermisch verformbare Folie ausgebildet sein, z.B. als Schrumpffolie oder als Folie, die sich unter Erwärmung erweicht und an den Körper 17 anlegt, um an diesem zu haften.

Die erfindungsgemäße Druckentlastungseinrichtung 15 umfasst einen gasdurchlässigen Körper 17, an dem eine Membran 21 haftet, die vorzugsweise feuchtigkeitsundurchlässig ausgebildet ist. Die Membrane 21 kann eine ein- oder mehrschichtige Gummimembrane sein, die beispielsweise durch Auftrag von Flüssiggummi auf dem Druckentlastungskörper 17 und gegebenenfalls ein dieses tragendes ihn einfassendes Bauteil 16 erzeugt worden ist.

### Bezugszeichen:

- 10: Gehäuse
- 11: Innenraum
- 12, 13: Komponenten
- 14: Umgebung
- 15: Druckentlastungseinrichtung
- 16: Bauteil
- 17: poröser Körper/ Druckentlastungskörper
- 18: Schweißnaht
- 19: Druckentlastungsöffnung
- 20: Gitter
- 21, 21a: Membrane
- 22: der Umgebung zugewandte Seite des Körpers 17
- 23 - 26: Poren
- 27: Folie
- 28: Funktionselement

## Patentansprüche

1. Druckentlastungseinrichtung (15), insbesondere für explosionsgeschützte Gehäuse (10),
mit einem porösen, gasdurchlässigen Körper (17), der eine erste Seite, die in Gebrauch einem mindestens eine potentielle Zündquelle (12, 13) enthaltenden Volumen zugewandt ist, und eine zweite Seite aufweist, die in Gebrauch von dem Volumen abgewandt ist,
mit einer Membrane (21), die an dem porösen Körper (17) anliegend angebracht ist,
**dadurch gekennzeichnet, dass** zu der Membrane (21a) eine an dem porösen Körper (17) anliegende Folie (27) gehört.

2. Druckentlastungseinrichtung nach Anspruch 1, **dadurch gekennzeichnet, dass** die Membrane (21) vollflächig an dem porösen Körper (17) anliegend angebracht ist.

3. Druckentlastungseinrichtung nach einem der vorstehenden Ansprüche, **dadurch gekennzeichnet, dass** die Membrane (21) an dem porösen Körper (17) haftend angebracht ist.

4. Druckentlastungseinrichtung nach einem der vorstehenden Ansprüche, **dadurch gekennzeichnet, dass** die Membrane (21) eine feuchtigkeitsundurchlässige Folie ist.

5. Druckentlastungseinrichtung nach einem der vorstehenden Ansprüche, **dadurch gekennzeichnet, dass** die Membrane (21) an dem porösen Körper (17) abziehbar haftend angebracht ist.

6. Druckentlastungseinrichtung nach Anspruch 1, **dadurch gekennzeichnet, dass** die Folie (27) ein Papier, eine Kunststofffolie, eine Metallfolie, eine Verbundmaterialfolie, eine Kunststoff/Metall-Verbundfolie, ein Gewebe oder eine sonstiges flexibles Flächengebilde ist.

7. Druckentlastungseinrichtung nach einem der vorstehenden Ansprüche, **dadurch gekennzeichnet, dass** der Körper (17) ein ebener Druckentlastungskörper ist.

8. Druckentlastungseinrichtung nach einem der Ansprüche 1 bis 5, **dadurch gekennzeichnet, dass** der Körper (17) eine nicht ebene zweite Seite aufweist.

9. Druckentlastungseinrichtung nach einem der vorstehenden Ansprüche, **dadurch gekennzeichnet, dass** sich die Membrane (21) abschnittsweise über ein den Körper (21) tragendes Bauteil (16) erstreckt und an diesem haftend angebracht ist.

10. Druckentlastungseinrichtung nach einem der vorstehenden Ansprüche, **dadurch gekennzeichnet, dass** sich die Membrane (21) über ein an der zweiten Seite des Körpers (17) angeordnetes Gitter (20) erstreckt.

11. Druckentlastungseinrichtung nach einem der vorstehenden Ansprüche, **dadurch gekennzeichnet, dass** die Membrane (21) im Urformverfahren an dem porösen Körper (17) erzeugt worden ist.

12. Gehäuse (10) mit einer Druckentlastungseinrichtung (15) nach einem der vorstehenden Ansprüche.

## Claims

1. Pressure relief device (15), in particular for explosion-protected housings (10),
having a porous, gas-permeable body (17) that comprises a first side, which, in use, faces a volume that contains at least one potential ignition source (12, 13), and a second side which, in use, faces away from the volume,
having a membrane (21) that is attached to the porous body (17) in such a manner that it is in abutment against the porous body (17),
**characterized in that** the membrane (21a) includes a foil (27) that abuts against the porous body (17).

2. Pressure relief device according to claim 1, **characterized in that** the membrane (21) is attached to the porous body (17) in such a manner that it is in abutment thereagainst over its entire surface.

3. Pressure relief device according to any of the preceding claims, **characterized in that** the membrane (21) is adhered to the porous body (17).

4. Pressure relief device according to any of the preceding claims, **characterized in that** the membrane (21) is a moisture-impermeable foil.

5. Pressure relief device according to any of the preceding claims, **characterized in that** the membrane (21) is adhered to the porous body (17) in a detachable manner.

6. Pressure relief device according to claim 1, **characterized in that** the foil (27) is a piece of paper, a plastic foil, a metal foil, a composite material foil, a plastic/metal composite foil, a woven fabric or another flexible sheet-like structure.

7. Pressure relief device according to any of the preceding claims, **characterized in that** the body (17) is a planar pressure relief body.

8. Pressure relief device according to any of the claims 1 to 5, **characterized in that** the body (17) has a non-planar second side.

9. Pressure relief device according to any of the preceding claims, **characterized in that** the membrane (21) extends in sections over a component (16) supporting the body (21) and is adhered thereto.

10. Pressure relief device according to any of the preceding claims, **characterized in that** the membrane (21) extends over a grid (20) arranged on the second side of the body (17).

11. Pressure relief device according to any of the preceding claims, **characterized in that** the membrane (21) has been created on the porous body (17) using a primary forming method.

12. Housing (10) having a pressure relief device (15) according to any of the preceding claims.

## Revendications

1. Dispositif de décompression (15), notamment pour des boîtiers antidéflagrants (10),
comprenant un corps (17) poreux perméable au gaz, qui présente une première face qui, lors de l'utilisation, est tournée vers un volume contenant au moins une source d'inflammation (12, 13) potentielle, et une deuxième face qui est éloignée du volume lors de l'utilisation,
comprenant une membrane (21) qui est fixée en étant appliquée contre le corps (17) poreux,
**caractérisé en ce que** la membrane (21a) comprend une feuille (27) appliquée contre le corps (17) poreux.

2. Dispositif de décompression selon la revendication 1, **caractérisé en ce que** la membrane (21) est fixée en étant appliquée sur toute sa surface contre le corps (17) poreux.

3. Dispositif de décompression selon une des revendications précédentes, **caractérisé en ce que** la membrane (21) est fixée en adhérant au corps (17) poreux.

4. Dispositif de décompression selon une des revendications précédentes, **caractérisé en ce que** la membrane (21) est une feuille imperméable à l'humidité.

5. Dispositif de décompression selon une des revendications précédentes, **caractérisé en ce que** la membrane (21) est fixée en adhérant de façon amovible au corps (17) poreux.

6. Dispositif de décompression selon la revendication 1, **caractérisé en ce que** la feuille (27) est un papier, un film en matière plastique, une feuille métallique, une feuille en matériau composite, une feuille composite en matière plastique-métal, un tissu ou une autre structure plane souple.

7. Dispositif de décompression selon une des revendications précédentes, **caractérisé en ce que** le corps (17) est un corps de décompression plan.

8. Dispositif de décompression selon une des revendications 1 à 5, **caractérisé en ce que** le corps (17) présente une deuxième face non plane.

9. Dispositif de décompression selon une des revendications précédentes, **caractérisé en ce que** la membrane (21) s'étend par portions sur un élément de construction (16) portant le corps (21) et est fixée par adhérence à celui-ci.

10. Dispositif de décompression selon une des revendications précédentes, **caractérisé en ce que** la membrane (21) s'étend sur une grille (20) disposée sur la deuxième face du corps (17).

11. Dispositif de décompression selon une des revendications précédentes, **caractérisé en ce que** la membrane (21) a été réalisée sur le corps (17) poreux selon un procédé de formage primaire.

12. Boîtier (10) doté d'un dispositif de décompression (15) selon une des revendications précédentes.
